# EUROPEAN PATENT SPECIFICATION

(11) **EP 2 735 654 B1**
(45) Date of publication and mention of the grant of the patent: **29.07.2015**
(21) Application number: 12194359.1
(22) Date of filing: 27.11.2012
(51) Int. Cl.: E02F 5/08, E02F 9/22, E01C 23/09, H02G 1/06

(54) **Wheel trenching apparatus for laying cable into ground**
Radgrabvorrichtung zum Verlegen von Kabeln in den Boden
Appareil d'excavation de roue servant à poser des câbles dans le sol

(43) Date of publication of application: 28.05.2014
(73) Proprietor: Jaakkola, Lasse, 38710 Kankaanpää (FI)
(72) Inventor: Jaakkola, Lasse, 38710 Kankaanpää (FI)
(74) Representative: Papula Oy

(56) References cited:
- US-A- 4 748 966
- US-A- 4 848 845
- US-B1- 6 381 879

## Description

### FIELD OF THE INVENTION

The present invention relates to a wheel trenching apparatus for laying cable into ground. The apparatus comprises a hydraulically driven trenching wheel for making a narrow trench into ground for cable laying.

### BACKGROUND OF THE INVENTION

Wheel or disc-type trenching apparatuses are used in the so-called mini-trenching technique (also called micro-trenching) that allows the installation of underground optical cables in ducts or directly buried copper cables in small trenches. The advantages of this technique over conventional cable laying technologies lie essentially in its speed of execution, lower cost, significantly lower environmental impact and limited disruption to road traffic and, as a consequence of the previous items, easiness in obtaining permits for the taking over of public area. Mini-trenching is normally carried out by simultaneously cutting through the paving and digging a trench whose depth and cross-section vary in accordance with the number of ducts to be laid: the depth is normally between 30 and 40 cm, while the cross-section can vary between 7 and 15 cm. In order to guarantee protection against the impact resulting from road-repairing, the depth of the laid infrastructure shall be maintained constant at a known level that must be 5 cm deeper than the foreseen asphalt cutting depth normally specified for road surface repair works. ITU-T Recommendation L.48 03/2003 "Mini-trench installation technique" describes the technique and also shows an example of the prior art wheel trenching apparatus. Similar apparatuses are also known e.g. from patent documents US 5,575,538, US 6,467,201, WO 2011/011732 A2 and WO 2012/030994 A1.

Typically, the known wheel trenching apparatuses are based on a massive heavy-duty work vehicle wherein the trenching wheel is integrated so that the trenching apparatus is fixedly integrated in the work vehicle. The trenching wheel is typically hydraulically connected to the open-loop hydraulic system of the work vehicle to rotate the trenching wheel. In an open-loop hydraulic system, in order to obtain enough power for the rotation of the trenching wheel under operation to cut asphalt and soil to the required depth, the pressure of the hydraulic fluid has to be raised from the tank pressure of 0 bar to about 300 bar. This requires a lot of power. Therefore, the operation of the trenching wheel requires a very powerful power engine. A typical trencher needs a power engine having a power of the order of 330 kW. Such a trenching machine is also very heavy; the weight is of the order of 30 tons. The achievable trenching depth is typically only about 40 cm. In many applications, such heavy-duty machines are not practical because they are designed to perform only the trenching work and cannot be used for anything else.

### OBJECT OF THE INVENTION

The object of the invention is to eliminate the disadvantages mentioned above.

In particular, it is an object of the present invention to provide a wheel trenching apparatus which can be used in connection with a light work vehicle, such as a farming tractor or the like.

It is also an object of the present invention to provide a wheel trenching apparatus that requires a smaller amount of power to operate in relation to the known apparatuses.

It is also an object of the present invention to provide a wheel trenching apparatus that is able to excavate a trench having a width of the order of 10 to 14 cm and a depth of the order of 70 cm with a travelling speed of 1 to 5 m/min depending on the quality of ground to be trenched.

### SUMMARY OF THE INVENTION

According to an aspect, the present invention provides a wheel trenching apparatus for laying cable into ground, the apparatus comprising a hydraulically driven trenching wheel for making a narrow trench into ground for cable laying.

According to the invention, the wheel trenching apparatus is configured as an auxiliary implement for a work vehicle. The apparatus has a three-point connecting means detachably mountable to a three-point linkage of the work vehicle. The apparatus comprises a closed-loop hydraulic circuit for rotating the trenching wheel. The closed-loop hydraulic circuit comprises a hydraulic pump which is drivable by a power take-off of the work vehicle and a hydraulic motor hydraulically connected to the pump to rotate the trenching wheel. The closed-loop hydraulic circuit is separate and independent in relation to a hydraulic system of the work vehicle.

An advantage of the invention is that, due to the detachably mountable three-point attachment, the wheel trenching apparatus can be quickly detached and attached from/to the work vehicle so that the work vehicle can also be used for other purposes. Further, the advantage of the invention is that, due to the closed-loop hydraulic circuit which can constantly work with a high pressure and which is not connected and therefore is independent from the open-loop hydraulic system of the work vehicle, the relatively low power obtained from the power take-off of the work vehicle is sufficient to operate the trenching wheel with high efficiency. When the work vehicle is a tractor, the typical output power of the power take-off is about 60 kW which is enough to transmit sufficient hydraulic power via the closed-loop circuit to the trenching wheel.

In one embodiment of the apparatus, the wheel trenching apparatus comprises a frame to which the three-point connecting means is connected. The frame comprises a hollow structure having an interior which is hydraulically connected to the closed-loop hydraulic circuit so that the frame can act as a combined pressure reservoir and cooler for the hydraulic fluid in the closed loop hydraulic circuit. The frame can be the only cooling means in the closed-loop hydraulic circuit, whereby a separate cooling device is not needed, or, if more cooling power is needed, only a small auxiliary cooler can be added.

In one embodiment of the apparatus, the frame comprises wheels by which the wheel trenching apparatus can be supported on ground while operated.

In one embodiment of the apparatus, the hydraulic pump of the closed-loop hydraulic circuit is located in the wheel trenching apparatus and connected to the frame.

In one embodiment of the apparatus, the wheel trenching apparatus comprises a power intake shaft which is supported by bearings to the frame, to which power intake shaft a universal shaft which is connected to the power take-off of the work vehicle is connectable.

In one embodiment of the apparatus, the power intake shaft is arranged to drive the hydraulic pump.

In one embodiment of the apparatus, the hydraulic pump of the closed-loop hydraulic circuit is located in the work vehicle. The hydraulic pump is driven by a power take-off of the work vehicle. Power transmission between the hydraulic pump and the other components of the closed-loop hydraulic circuit is arranged via hydraulic hoses provided with hydraulic quick-detachable couplings.

In one embodiment of the apparatus, the wheel trenching apparatus comprises a lift mechanism comprising a hydraulic cylinder which is hydraulically connectable to the hydraulic system of the work vehicle for lifting and lowering the trenching wheel by the hydraulic power provided by the hydraulic system of the work vehicle.

In one embodiment of the apparatus, the lift mechanism comprises a pivot arm having a first end pivoted to the frame and a second end to which the trenching wheel is bearing-mounted.

In one embodiment of the apparatus, the apparatus comprises a cable guide which is located between the three-point connecting means and the trenching wheel.

In one embodiment of the apparatus, the apparatus comprises a trench filling plow for plowing the soil excavated by the trenching wheel into the trench over the cable laid in the trench.

In one embodiment of the apparatus, the work vehicle is a tractor. Since in most of the tractors the three-point linkage and power take-off are located at the rear of the tractor, preferably, and since in the operation of the wheel trenching apparatus the tractor moves backwards, preferably, the tractor is equipped with a steering station and a seat that can be turned for degrees so that the driver faces the travel direction.

In one embodiment of the apparatus, the closed-loop hydraulic circuit is arranged to operate under the pressure of 200 to 350 bar.

### BRIEF DESCRIPTION OF THE DRAWINGS

The accompanying drawings, which are included to provide a further understanding of the invention and constitute a part of this specification, illustrate embodiments of the invention and together with the description help to explain the principles of the invention. In the drawings:
Figure 1 is a schematic side view of the wheel trenching apparatus of an embodiment of the invention,
Figure 2 shows the apparatus of Figure 1 in operation,
Figure 3 is a schematic top plan view of the apparatus of Figure 1 according to a first embodiment of the invention,
Figure 4 is a section IV-IV from Figure 3,
Figure 5 is a schematic hydraulic circuit of the wheel trenching apparatus of Figure 3,
Figure 6 is a schematic top plan view of the apparatus of Figure 1 according to a second embodiment of the invention,
Figure 7 is a schematic hydraulic circuit of the wheel trenching apparatus of Figure 6.

### DETAILED DESCRIPTION OF THE INVENTION

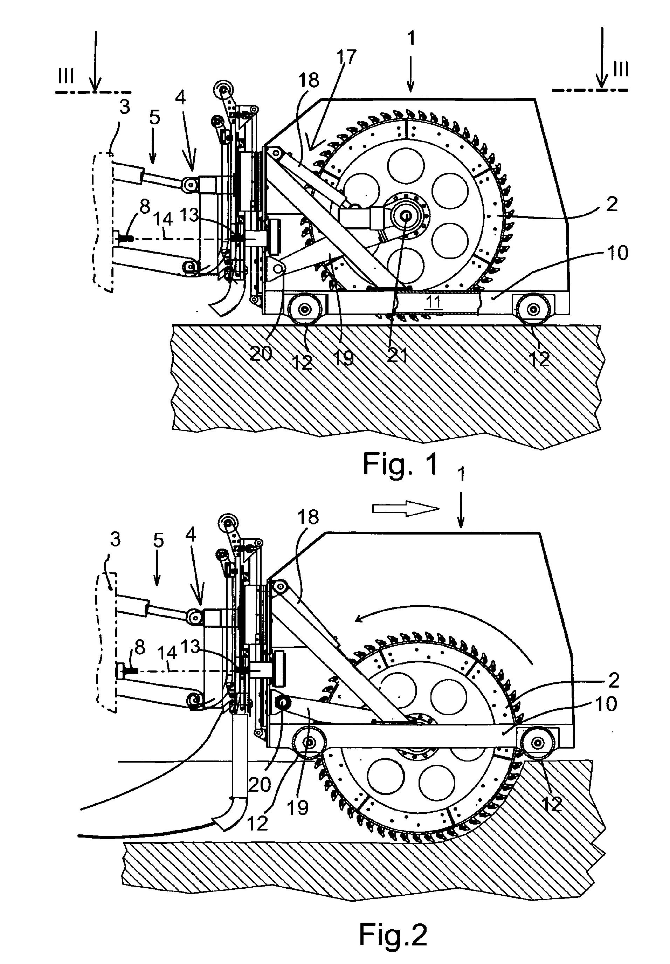

Figures 1 to 3 show a wheel trenching apparatus 1 for laying cable or a suchlike elongated continuous article into ground. The apparatus comprises a hydraulically driven trenching wheel 2 for making a narrow trench into ground. The wheel trenching apparatus 1 is configured as an auxiliary implement for a work vehicle 3 (not entirely shown). The work vehicle 3 is preferably a tractor, such as a farming tractor or the like, which has a three-point linkage 5 for the attachment of work implements and a power take-off shaft 8, both located at the rear of the work vehicle 3. The wheel trenching apparatus comprises a three-point connecting means 4 which can be detachably mounted to the work vehicle 3 so that the apparatus can be moved with the aid of the work vehicle. As shown in Figure 2, in operation, the wheel trenching apparatus 1 is moved by the work vehicle 3 which is backing up. Thereby, the driver of the work vehicle has a very good visibility to the trenching area and can readily observe the quality of the trench and the cable laying operation. The travelling speed is preferably about 1 to 5 m/min. Thereby, the driver is instantly able to react to any failure situation. The diameter of the trenching wheel 2 can be about 1.8 m so that a trench with a depth of 70 cm can be obtained. The weight of the apparatus can be about 2.5 to 3 tons. Therefore, the apparatus has to be supported by wheels 12 on the ground surface. The wheel trenching apparatus 1 comprises a lift mechanism 17 comprising a hydraulic cylinder 18 which is hydraulically connectable to the hydraulic system of the work vehicle 3 for lifting and lowering the trenching wheel 2 by the hydraulic power provided by the hydraulic system of the work vehicle 3. The lift mechanism 17 comprises a pivot arm 19 having a first end 20 pivoted to the frame 10 and a second end 21 to which the trenching wheel 2 is bearing-mounted. The apparatus also comprises a cable guide 22 which is located between the three-point connecting means 4 and the trenching wheel 2.

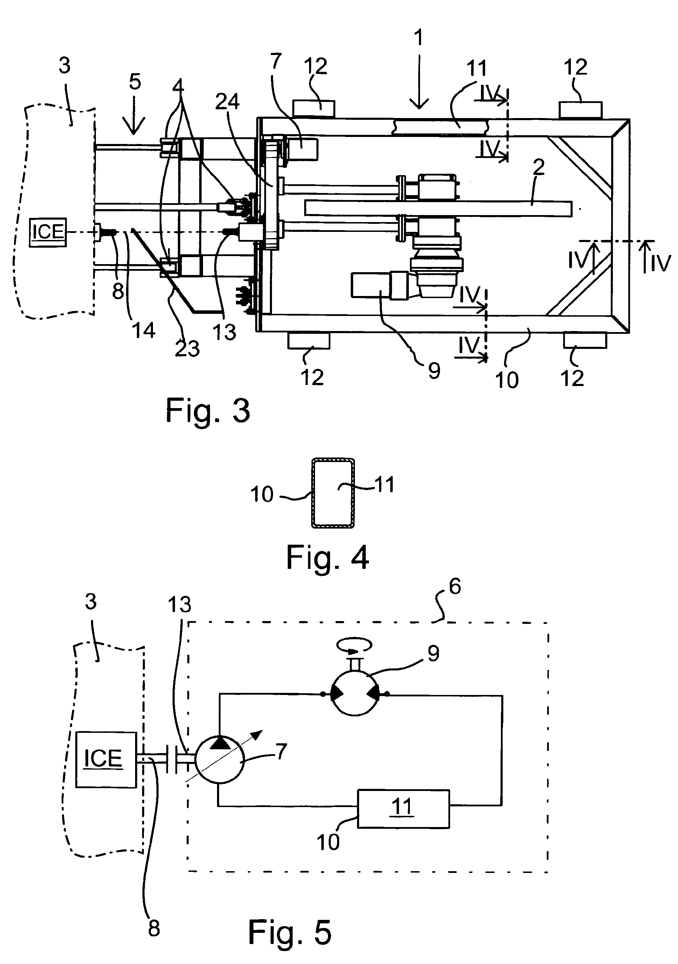

With reference to Figure 3, the apparatus comprises a backfilling plow 23 for plowing the soil excavated by the trenching wheel 2 into the trench over the cable laid in the trench.

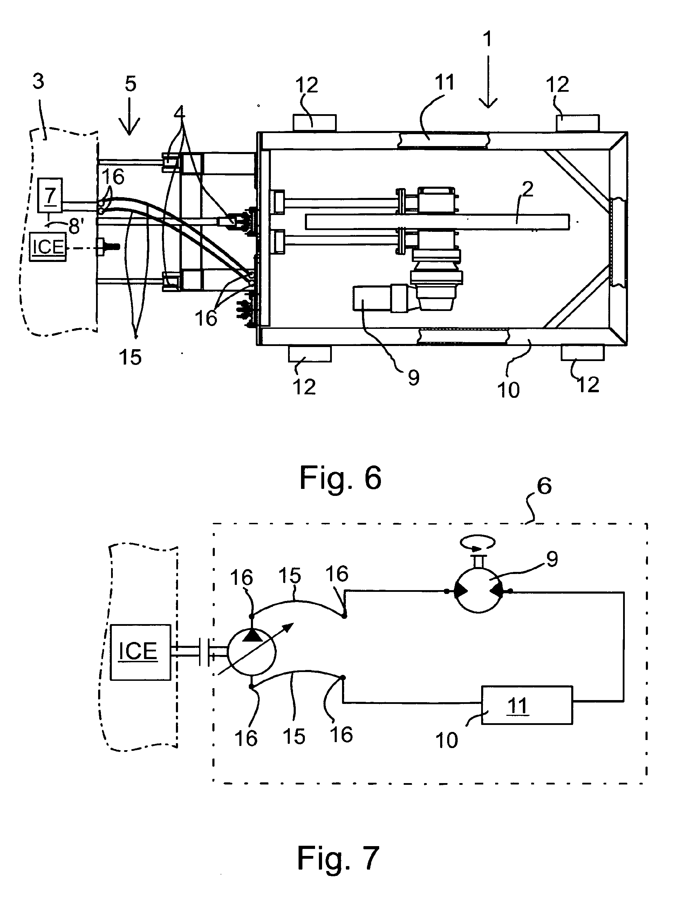

The apparatus comprises a closed-loop hydraulic circuit 6 for rotating the trenching wheel 2. Schematic and simplified presentations of the closed-loop hydraulic circuit 6 are shown in Figures 5 and 7.

The closed-loop hydraulic circuit 6 comprises a hydraulic pump 7 which is drivable by a power take-off 8 of the work vehicle 3. A hydraulic motor 9 is hydraulically connected to the pump 7 to rotate the trenching wheel 2, and the closed-loop hydraulic circuit 6 is separate and independent in relation to a hydraulic system of the work vehicle. The closed-loop hydraulic circuit 6 is arranged to operate under a high pressure of 200 to 350 bar.

The wheel trenching apparatus 1 comprises a frame 10 to which the three-point connecting means 4 is connected. As shown in Figures 3 and 4, the frame 10 comprises a hollow structure having an interior 11. The interior 11 is hydraulically connected to the closed-loop hydraulic circuit 6 so that the frame 10 can act as a combined pressure reservoir and also a cooler for the hydraulic fluid in the closed-loop hydraulic circuit. The hollow structure of the frame 10 is formed of rectangular hollow section beams, as is shown in cross-section in Figure 4. The frame 10 comprises wheels 12 by which the wheel trenching apparatus 1 can be supported on ground while it is operated.

With reference to Figure 3, in this embodiment the hydraulic pump 7 of the closed-loop hydraulic circuit 6 is located in the wheel trenching apparatus 1 and is connected to the frame 10. The wheel trenching apparatus 1 comprises a power intake shaft 13 which is supported by bearings to the frame 10. One end of a universal shaft 14 (not shown) can be connected to the power intake shaft 13 and the other end of the universal shaft can be connected to the power take-off 8 of the tractor 3. The power intake shaft 13 is arranged to drive the hydraulic pump 7 via a belt transmission 24.

In the embodiment as illustrated in Figures 6 and 7, the hydraulic pump 7 of the closed-loop hydraulic circuit 6 is located in the work vehicle 3. The hydraulic pump 7 is driven by a power take-off 8' of the work vehicle 3. The power transmission between the hydraulic pump 7 and the other components of the closed-loop hydraulic circuit 6 is arranged via hydraulic hoses 15 provided with hydraulic quick-detachable couplings 16.

While the present inventions have been described in connection with a number of exemplary embodiments and implementations, the present inventions are not so limited, but rather cover various modifications and equivalent arrangements which fall within the purview of the prospective claims.

## Claims

1. A wheel trenching apparatus (1) for laying cable into ground, the apparatus comprising a hydraulically driven trenching wheel (2) for making a narrow trench into ground for cable laying, **characterized in that** the wheel trenching apparatus (1) is configured as an auxiliary implement for a work vehicle (3), the apparatus having a three-point connecting means (4) detachably mountable to a three-point linkage (5) of the work vehicle (3), and the apparatus comprises a closed-loop hydraulic circuit (6) for rotating the trenching wheel (2), said closed-loop hydraulic circuit (6) comprising a hydraulic pump (7) which is drivable by a power take-off (8) of the work vehicle and a hydraulic motor (9) hydraulically connected to the hydraulic pump (7) to rotate the trenching wheel (2), and that the closed-loop hydraulic circuit (6) is separate and independent in relation to a hydraulic system of the work vehicle.

2. The wheel trenching apparatus according to claim 1, **characterized in that** the wheel trenching apparatus (1) comprises a frame (10) to which the three-point connecting means (4) is connected, and that the frame (10) comprises a hollow structure having an interior (11) which is hydraulically connected to the closed-loop hydraulic circuit (6) so that the frame (10) can act as a combined pressure reservoir and cooler for the hydraulic fluid in the closed-loop hydraulic circuit.

3. The wheel trenching apparatus according to claim 2, **characterized in that** the frame (10) comprises wheels (12) by which the wheel trenching apparatus (1) can be supported on ground while operated.

4. The wheel trenching apparatus according to any one of the claims 1 to 3, **characterized in that** the hydraulic pump (7) of the closed-loop hydraulic circuit (6) is located in the wheel trenching apparatus (1) and connected to the frame (10).

5. The wheel trenching apparatus according to claim 4, **characterized in that** the wheel trenching apparatus (1) comprises a power intake shaft (13) which is supported by bearings to the frame (10), to which power intake shaft (13) a universal shaft (14), which is connected to the power take-off (8) of the work vehicle (3), is connectable.

6. The wheel trenching apparatus according to claim 5, **characterized in that** the power intake shaft (13) is arranged to drive the hydraulic pump (7).

7. The wheel trenching apparatus according to any one of the claims 1 to 3, **characterized in that** the hydraulic pump (7) of the closed-loop hydraulic circuit (6) is locatable in the work vehicle (3); that the hydraulic pump is driven by a power take-off (8') of the work vehicle (3); and that the power transmission between the hydraulic pump (7) and the other components of the closed-loop hydraulic circuit (6) is arranged via hydraulic hoses (15) provided with hydraulic quick-detachable couplings (16).

8. The wheel trenching apparatus according to any one of the claims 1 to 7, **characterized in that** the wheel trenching apparatus (1) comprises a lift mechanism (17) comprising a hydraulic cylinder (18) which is hydraulically connectable to the hydraulic system of the work vehicle (3) for lifting and lowering the trenching wheel (2) by the hydraulic power provided by the hydraulic system of the work vehicle (3).

9. The wheel trenching apparatus according to claim 8, **characterized in that** the lift mechanism (17) comprises a pivot arm (19) having a first end (20) pivoted to the frame (10) and a second end (21) to which the trenching wheel (2) is bearing-mounted.

10. The wheel trenching apparatus according to any one of the claims 1 to 9, **characterized in that** the apparatus comprises a cable guide (22) which is located between the three-point connecting means (4) and the trenching wheel (2).

11. The wheel trenching apparatus according to any one of the claims 1 to 10, **characterized in that** the apparatus comprises a backfilling plow (23) for plowing the soil excavated by the trenching wheel (2) into the trench over the cable laid in the trench.

12. The wheel trenching apparatus according to any one of the claims 1 to 11, **characterized in that** the work vehicle (3) is a tractor.

13. The wheel trenching apparatus according to any one of the claims 1 to 11, **characterized in that** the closed-loop hydraulic circuit (6) is arranged to operate under a pressure of 200 to 350 bar.

## Patentansprüche

1. Rad-Grabenfräsvorrichtung (1) zum Verlegen von Kabeln in den Boden, wobei die Vorrichtung ein hydraulisch angetriebenes Fräsrad (2) zum Herstellen eines schmalen Grabens zur Kabelverlegung umfasst,
**dadurch gekennzeichnet, dass**
die Rad-Grabenfräsvorrichtung (1) als ein Hilfsgerät für ein Arbeitsfahrzeug (3) konfiguriert ist, wobei die Vorrichtung ein an die Dreipunktaufhängung (5) des Arbeitsfahrzeugs (3) lösbar montierbares Dreipunktverbindungsmittel (4) aufweist, und
wobei die Vorrichtung einen geschlossenen Hydraulikkreis (6) zum Rotieren des Fräsrads (2) umfasst, wobei der geschlossene Hydraulikkreis (6) zum Rotieren des Fräsrads (2) eine von einem Nebenantrieb (8) des Arbeitsfahrzeugs antreibbare hydraulische Pumpe (7) und ein mit der hydraulischen Pumpe (7) hydraulisch verbundener hydraulischer Motor (9) umfasst, und, dass der geschlossene Hydraulikkreis (6) separat und unabhängig in Bezug auf das hydraulische System des Arbeitsfahrzeugs ist.

2. Rad-Grabenfräsvorrichtung gemäß Anspruch 1,
**dadurch gekennzeichnet, dass**
die Rad-Grabenfräsvorrichtung (1) einen Rahmen (10) aufweist, mit welchem das Dreipunktverbindungsmittel (4) verbunden ist, und,
dass der Rahmen (10) eine einen mit dem geschlossenen Hydraulikkreis (6) verbundenen Innenraum umfassende Hohlstruktur aufweist, so dass der Rahmen (10) kombiniert als Druckspeicher und Kühler für das hydraulische Fluid in dem geschlossenen Hydraulikkreis wirken kann.

3. Rad-Grabenfräsvorrichtung gemäß Anspruch 2,
**dadurch gekennzeichnet, dass**
der Rahmen (10) Räder (12) umfasst, durch welche die Rad-Grabenfräsvorrichtung (1) während des Betriebs am Boden gestützt werden kann.

4. Rad-Grabenfräsvorrichtung gemäß einem der Ansprüche 1 bis 3,
**dadurch gekennzeichnet, dass**
die hydraulische Pumpe (7) des geschlossenen Hydraulikkreises (6) in der Rad-Grabenfräsvorrichtung angeordnet und mit dem Rahmen (10) verbunden ist.

5. Rad-Grabenfräsvorrichtung gemäß Anspruch 4,
**dadurch gekennzeichnet, dass**
die Rad-Grabenfräsvorrichtung (1) eine von Lagern am Rahmen (10) abgestützte Krafteingangswelle (13) umfasst, mit der eine mit dem Nebenantrieb (8) des Arbeitsfahrzeugs (3) verbundene Gelenkwelle (14) verbindbar ist.

6. Rad-Grabenfräsvorrichtung gemäß Anspruch 5,
**dadurch gekennzeichnet, dass**
die Krafteingangswelle (13) gestaltet ist, um die hydraulische Pumpe (7) anzutreiben.

7. Rad-Grabenfräsvorrichtung gemäß einem der Ansprüche 1 bis 3,
**dadurch gekennzeichnet, dass**
die hydraulische Pumpe (7) des geschlossenen Hydraulikkreises (6) in dem Arbeitsfahrzeug (3) angeordnet werden kann;
die hydraulische Pumpe von einem Nebenantrieb (8') des Arbeitsfahrzeugs (3) angetrieben wird; und, dass
die Kraftübertragung zwischen der hydraulischen Pumpe (7) und den anderen Komponenten des geschlossenen Hydraulikkreises (6) mit Hydraulikschläuchen (15) bereitgestellt mit hydraulischen Schnellkupplungen (16) gestaltet ist.

8. Rad-Grabenfräsvorrichtung gemäß einem der Ansprüche 1 bis 7,
**dadurch gekennzeichnet, dass**
die Rad-Grabenfräsvorrichtung einen einen hydraulischen Zylinder (18) umfassenden Hebemechanismus (17) umfasst, welcher mit dem hydraulischen System des Arbeitsfahrzeuges (3) hydraulisch verbindbar ist zum Heben und Senken des Fräsrads (2) durch die von dem hydraulischen System des Arbeitsfahrzeuges (3) bereitgestellte hydraulische Kraft.

9. Rad-Grabenfräsvorrichtung gemäß Anspruch 8,
**dadurch gekennzeichnet, dass**
der Hebemechanismus (17) einen Schwenkarm (19) umfasst, welcher ein an den Rahmen (10) geschwenktes erstes Ende (20) und ein zweites Ende (21), an welchem das Fräsrad (2) gelagert angebracht ist, aufweist.

10. Rad-Grabenfräsvorrichtung gemäß einem der Ansprüche 1 bis 9,
**dadurch gekennzeichnet, dass**
die Vorrichtung eine zwischen dem Dreipunktverbindungsmittel (4) und dem Fräsrad (2) angeordnete Kabelführung (22) umfasst.

11. Rad-Grabenfräsvorrichtung gemäß einem der Ansprüche 1 bis 10,
**dadurch gekennzeichnet, dass**
die Vorrichtung einen Verfüllungspflug (23) zum Pflügen des durch das Fräsrad (2) ausgegrabenen Bodens in den Graben über das in dem Boden gelegte Kabel umfasst.

12. Rad-Grabenfräsvorrichtung gemäß einem der Ansprüche 1 bis 11,
**dadurch gekennzeichnet, dass**
das Arbeitsfahrzeug (3) ein Traktor ist.

13. Rad-Grabenfräsvorrichtung gemäß einem der Ansprüche 1 bis 11,
**dadurch gekennzeichnet, dass**
der geschlossene Hydraulikkreis (6) zum Betrieb unter einem Druck von 200 bis 350 bar gestaltet ist.

## Revendications

1. Trancheuse à roue (1) pour la pose de câbles dans le sol, la trancheuse comprenant une roue trancheuse entraînée hydrauliquement (2) pour creuser une tranchée étroite dans le sol pour la pose de câbles, **caractérisée en ce que** la trancheuse à roue (1) est conçue comme un outil auxiliaire pour un véhicule de travail (3), la trancheuse ayant un moyen de raccordement à trois points (4) pouvant être monté de façon amovible à un attelage à trois points (5) du véhicule de travail (3), et la trancheuse comprenant un circuit hydraulique à boucle fermée (6) pour entraîner en rotation la roue trancheuse (2), ledit circuit hydraulique (6) comprenant une pompe hydraulique (7) qui peut être entraînée par une sortie de force du véhicule de travail et un moteur hydraulique (9) raccordé hydrauliquement à la pompe hydraulique (7) pour entraîner en rotation la roue trancheuse (2), et **en ce que** le circuit hydraulique à boucle fermée (6) est séparé et indépendant d'un système hydraulique du véhicule de travail.

2. Trancheuse à roue suivant la revendication 1, **caractérisée en ce que** la trancheuse à roue (1) comprend un châssis (10), auquel le moyen de raccordement à trois points (4) est raccordé et **en ce que** le châssis (10) comprend une structure creuse ayant un espace intérieur (11) qui est relié hydrauliquement au circuit hydraulique à boucle fermée (6) de façon que le châssis (10) peut agir comme réservoir de pression et dispositif de refroidissement combiné pour le fluide hydraulique dans le circuit hydraulique à boucle fermée.

3. Trancheuse à roue suivant la revendication 2, **caractérisée en ce que** le châssis (2) comprend des roues (12), au moyen desquelles la trancheuse peut reposer sur le sol pendant son fonctionnement.

4. Trancheuse à roue suivant une quelconque des revendications 1 à 3, **caractérisée en ce que** la pompe hydraulique (7) du circuit hydraulique à boucle fermée (6) est située dans la trancheuse à roue (1) et reliée au châssis (10).

5. Trancheuse à roue suivant la revendication 4, **caractérisée en ce que** la trancheuse à roue (1) comprend un arbre d'entrée de force (13) qui est supporté sur le châssis (10) au moyen de paliers, arbre d'entrée de force (13), auquel peut être relié un arbre universel (14) qui est raccordé à la prise de force (8) du véhicule de travail (3).

6. Trancheuse à roue suivant la revendication 5, **caractérisée en ce que** l'arbre d'entrée de force (13) est conçu pour entraîner une pompe hydraulique (7).

7. Trancheuse à roue suivant une quelconque des revendications 1 à 3, **caractérisée en ce que** la pompe hydraulique (7) du circuit hydraulique à boucle fermée (6) peut être positionnée dans le véhicule de travail (3), que la pompe hydraulique est actionnée par une prise de force (8') du véhicule de travail (3) et que la transmission de force entre la pompe hydraulique (7) et les autres composants du circuit hydraulique à boucle fermée (6) est assurée par des flexibles hydrauliques (15) pourvus de raccords rapides (16).

8. Trancheuse à roue suivant une quelconque des revendications 1 à 7, **caractérisée en ce que** la trancheuse à roue (1) comprend un mécanisme de levage (17) comprenant un cylindre hydraulique (18) qui peut être raccordé hydrauliquement au système hydraulique du véhicule de travail (3) pour soulever et abaisser la roue trancheuse (2) grâce à la force hydraulique fournie par le système hydraulique du véhicule de travail (3).

9. Trancheuse à roue suivant la revendication 8, **caractérisée en ce que** le mécanisme de levage (17) comprend un bras pivot (19) ayant une première extrémité (20) pivotée vers le châssis (10) et une seconde extrémité (21), à laquelle la roue trancheuse (2) est montée par l'intermédiaire d'un palier.

10. Trancheuse à roue suivant une quelconque des revendications 1 à 9, **caractérisée en ce qu'**elle comprend un guide-câble (22) qui est situé entre le moyen de raccordement à trois points (4) et la roue trancheuse.

11. Trancheuse à roue suivant une quelconque des revendications 1 à 10, **caractérisée en ce que** la trancheuse comprend une charrue de remblayage (23) pour remettre le sol excavé par la roue trancheuse (2) dans la tranchée, au-dessus du câble posée dans celle-ci.

12. Trancheuse à roue suivant une quelconque des revendications 1 à 11, **caractérisée en ce que** le véhicule de travail (3) est un tracteur.

13. Trancheuse à roue suivant une quelconque des revendications 1 à 11, **caractérisée en ce que** le circuit hydraulique à boucle fermée (6) et conçu pour fonctionner sous une pression de 200 à 350 bar.
